# EUROPÄISCHE PATENTANMELDUNG

(11) **EP 1 560 436 A1**
(43) Veröffentlichungstag der Anmeldung: **03.08.2005**
(21) Anmeldenummer: 04002001.8
(22) Anmeldetag: 29.01.2004
(51) Int. Cl.: H04N 7/16, H04N 7/173

(54) **Verteilungseinrichtung zum optimierten Verteilen von Kurznachrichten an ein IP-fähiges Endgerät**

(71) Anmelder: SIEMENS AKTIENGESELLSCHAFT, 80333 München (DE)
(72) Erfinder: Küchenhoff, Stefan Dr., 80797 München (DE); Unger, Stefan, 82008 Unterhaching (DE)

(57) **Zusammenfassung**

Das zuverlässige sowie kosten- und zeitoptimierte Senden von Kurznachrichten (SMS) oder Kurznachrichten mit Bildern (MMS) an ein IP-fähiges Endgerät, z.B. eine Set Top Box (STB), welche an dem Telekommunikationsnetz angeschlossen ist, wird erfindungsgemäß durch eine Funktions-Erweiterung des Verteilzentrums für SMS/MMS-Nachrichten sowie einer Registrierungsinstanz für IP-Verbindungen gelöst.

## Beschreibung

### Problemstellung der Erfindung

Das zuverlässige sowie kosten- und zeitoptimierte Senden von Kurznachrichten (SMS) oder Kurznachrichten mit Bildern (MMS) an ein IP-fähiges Endgerät, z.B. eine Set Top Box (STB) oder Personal Computer (PC), welche über eine hochbitratige Leitung (z.B. DSL oder Kabel) an dem Telekommunikationsnetz angeschlossen ist. Dabei werden die exstierenden technischen Möglichkeiten der Transportnetze besser ausgenützt als in den heute existierenden Lösungen.

### Mögliche Lösungen der Problemstellung

- Das Verteilzentrum (SMS/MMS Service Center) sendet die Kurznachricht über das paketvermittelte IP Netz bis zum Teilnehmer, allerdings wird die Nachricht verworfen falls der Teilnehmer nicht online ist. Das Verteilzentrum hat keine Möglichkeit zu überprüfen, ob die Nachricht wirklich angekommen ist. Dies ist im allgemeinen eine nicht akzeptable Lösung, insbesondere nicht für Betreiber die hohe Ansprüche an die Zuverlässigkeit des Dienstes stellen, z.B. Festnetz-Betreiber.
- Das Verteilzentrum sendet die Kurznachricht immer über das leitungsvermittelte Netz. Damit ist gewährleistet, dass der Teilnehmer die Nachricht auch wirklich bekommt. Allerdings ist dies nur möglich, wenn der Teilnehmer einen PSTN Dienst subskribiert hat (also zu Hause einen Splitter besitzt und eine PSTN Subskription mit einer PSTN Rufnummer besitzt). Außerdem ist dies im allgemeinen ein sehr teurer Weg, der zudem zusätzliche Funktionen im Verteilzentrum benötigt.

Bisher ist nicht bekannt wie eine SMS oder MMS zuverlässig über den geeignetesten Weg an eine individuelle Set Top Box gesendet werden kann.

### Lösung der Problemstellung gemäß der Erfindung

Im Netz wird zwischen dem SMS/MMS-Verteilzentrum (Verteilungseinrichtung) und einer Registrierungsinstanz eine neue Kommunikation eingeführt. Dazu ist es notwendig neue Funktionen in beiden Komponenten einzuführen.
Mithilfe dieser Kommunikationsbeziehung kann das Verteilzentrum bei der Registrierungsinstanz nachfragen, ob der Teilnehmer aktuell seinen Breitbandanschluss aktiviert hat (d.h. online ist und eine gültige IP Adresse hat). Das Verteilzentrum enthält außerdem eine neue Koordinationsfunktion, welche die Ergebnisse der Abfrage bei der Registrierungsinstanz auswertet und die Kurznachrichten entsprechend der verfügbaren Wege an IP-fähiges Endgerät des Teilnehmers, z.B. eine STB, sendet.

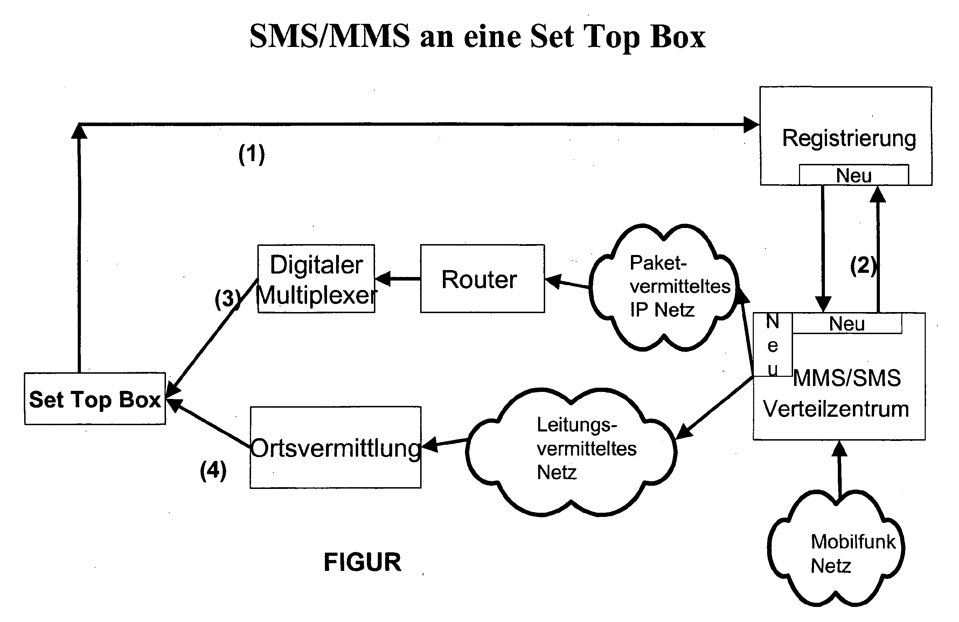

Im folgenden wird ein Ausführungsbeispiel der Erfindung anhand der Zeichnung, die eine Figur umfasst, näher erläutert.

Eine Teilnehmer besitzt eine STB, die z.B. die Dienste Video on Demand, Videotelefonie sowie Senden und Empfangen von Kurznachrichten unterstützt. Für letzteres ist ein SMS/MMS client in der STB notwendig. Die STB ist über eine DSL Leitung an einem DSLAM bzw. optional zusätzlich über einen Splitter an der Ortsvermittlungsstelle angeschlossen. Im Netz befindet sich das SMS/MMS Service Center (Verteilungseinrichtung), in dem die Kurznachrichten von unterschiedlichen Teilnehmertypen (z.B. Videonetz-Teilnehmer, Mobilfunk-Teilnehmer) empfangen und an die Adressaten weitergeleitet werden. Außerdem ist in dem DSL-basierten IP Netz eine Registrierungsinstanz vorhanden (z.B. ein Breitband Access Router, ein Radius-Server oder auch ein SIP Registrar/Server), bei der sich der Teilnehmer registrieren kann (siehe (1) in der Figur), so dass dort der aktuelle Status seines Netzzugangs, z.B. eines IP-Breitbandzugangs, festgehalten ist. Der Status ist entweder "online", d.h. dass dem Teilnehmer eine IP Adresse zugeordnet wurde und die PPPoE session aktiv ist oder der Status ist "inaktiv", d.h. der Teilnehmer hat keine IP basierte Verbindung.

Ein beliebiger Teilnehmer sendet nun, z.B. aus einem Mobilfunknetz eine MMS an unseren Teilnehmer, die an dessen STB zugestellt werden soll. Die MMS erreicht das Verteilzentrum. Dieses fragt nun bei der Registrierungsinstanz nach, ob der Teilnehmer registriert d.h. "online" ist (2). Falls ja erhält das Verteilzentrum die aktuelle IP Adresse der STB und sendet die MMS über das paketvermittelte IP Netz an die STB (3). Dazu muss das Verteilzentrum die MMS in IP Pakete mit der gerade erhaltenen IP Adresse einpacken.
Falls der Teilnehmer nicht aktiv ist, kann das Verteilzentrum die MMS zwischenspeichern und bei der Registrierungsinstanz in regelmäßigen Abständen nachfragen, ob sich der Status geändert hat oder falls möglich die MMS über das leitungsvermittelte Netz (PSTN) an die STB senden (4). Dazu baut es z.B. einen Sprachkanal zum Teilnehmer auf und sendet in diesem über eine Modemverbindung die MMS. Dies ist im allgemeinen die teurere Variante, die zudem zusätzliche Funktionen im Verteilzentrum erfordert (z.B. ein Modem) und ist zudem zeitintensiv. Ziel sollte es sein, diesen Weg nur dann zu verwenden, falls der günstigere DSL Weg nicht verfügbar ist.

Durch die Erfindung ergeben sich somit folgende Vorteile. Kurznachrichten können zuverlässig an eine STB gesendet werden, wobei die möglichen Wege auf Verfügbarkeit überprüft werden und die Kurznachrichten über den geeignetesten Weg gesendet werden. Bei der Auswahl des Weges können Kosten für den Transport der Daten, Datenrate und weitere Aspekte berücksichtigt werden. Insbesondere kann für die kostengünstigere Transportwege (z.B. über DSL) überprüft werden, ob die Kurznachrichten auch wirklich bis zum Teilnehmer gesendet werden können und nicht auf dem Weg dorthin verloren gehen.

## Patentansprüche

1. Verteilungseinrichtung zum Verteilen von Kurznachrichten an ein IP fähiges Endgerät, mit
einer Empfangseinrichtung, die Kurznachrichten für Teilnehmer empfängt,
einer Abfrageeinrichtung, die nach dem Eintreffen einer Kurznachricht für einen Teilnehmer eine Registrierungseinrichtung zum Registrieren eines Teilnehmers abfrägt, ob der Teilnehmer "online" ist,
einer Steuerungseinrichtung, welche das Abfrageergebnis auswertet und eine Kurznachricht in Abhängigkeit des Auswertungsergebnisses zu dem Teilnehmer weiterleitet oder zwischenspeichert.

2. Verteilungseinrichtung nach Anspruch 1,
**dadurch gekennzeichnet,**
**dass** sie die Kurznachricht zu dem Teilnehmer über das IP-Netz weiterleitet, wenn die genannte Abfrage ergibt, dass der Teilnehmer online ist.

3. Verteilungseinrichtung nach Anspruch 1,
**dadurch gekennzeichnet,**
**dass** sie die Kurznachricht für den Teilnehmer zwischenspeichert, wenn die genannte Abfrage ergibt, dass der Teilnehmer nicht online ist und keinen Zugang zum leitungsvermittelnde Netz hat,
sie in regelmäßigen Abständen eine erneutet Abfrage bei der Registrierungseinrichtung durchführt und die Kurznachricht zu dem Teilnehmer weiterleitet, sobald eine erneute Abfrage ergibt, dass der Teilnehmer nunmehr online ist.

4. Verteilungseinrichtung nach Anspruch 1,
**dadurch gekennzeichnet, dass**
sie die Kurznachricht zu dem Teilnehmer über das leitungsvermittelnde Netz weiterleitet, wenn die genannte Abrage ergibt, dass der Teilnehmer nicht online ist.

5. Registrierungseinrichtung, die bezüglich eines Teilnehmers den Status seines Netzzugangs registriert,
**dadurch gekennzeichnet, dass**
sie eine Schnittstelle zu einer Verteilungseinrichtung zum Verteilen von Kurznachrichten an ein IP fähiges Endgerät aufweist, über die sie die Abfrage der Verteilungseinrichtung zum Status des Netzzugangs des Teilnehmers beantwortet.
